# DEMANDE DE BREVET EUROPEEN

(11) **EP 0 951 129 A1**
(43) Date de publication de la demande: **20.10.1999**
(21) Numéro de dépôt: 99400910.8
(22) Date de dépôt: 14.04.1999
(51) Int. Cl.: H02J 9/06, G06F 1/30

(54) **Dispositif et procédé d'alimentation électrique sécurisée pour un système de reproduction audiovisuelle**

(30) Priorité: 14.04.1998 FR 9804894
(71) Demandeur: TOUCHTUNES MUSIC CORPORATION, Las Vegas, NV 89104 (US)
(72) Inventeur: Natha, Guy, 91330 Yerres (FR); Martineau, Pierre, Saint Bruno, Quebec J3V 1B9 (CA)
(74) Mandataire: Debay, Yves

(57) **Abrégé**

Dispositif d'alimentation électrique sécurisée pour système de reproduction audiovisuelle comprenant une alimentation (2) principale connectée à une source (1) de courant électrique, délivrant par des connexions (20) électriques au moins une tension déterminée à une unité centrale (6), cette unité centrale comprenant un programme (60) d'exploitation informatique comprenant un programme (62) de fermeture et de sauvegarde des fichiers du système informatique et un programme (62) de démarrage caractérisé en ce que le dispositif comprend également des moyens (4) de détection d'une chute, en deçà d'un seuil déterminé, d'une tension déterminée délivrée par l'alimentation (2) principale, des moyens (11, 12, 13) d'accumulation quasi instantanée d'énergie électrique connectés d'une part à la source (1) de courant électrique, et d'autre part à une alimentation (10) de secours délivrant à l'unité centrale (6) des tensions suffisantes à son fonctionnement, par un circuit de substitution automatique de l'alimentation de secours (10) à l'alimentation (2) principale et des moyens (5) de déclenchement d'une procédure de sauvegarde après un intervalle de temps déterminé.

## Description

La présente invention concerne un dispositif et un procédé d'alimentation sécurisée pour système de reproduction audiovisuelle qui permettent d'assurer la délivrance d'un courant lors d'une coupure d'alimentation électrique.

Un système de reproduction audiovisuelle, appelé aussi juke-box, a été décrit dans une demande de brevet française 9401185. Ce système comprend une unité centrale à microprocesseur compatible PC de haute performance qui possède des moyens de mémorisation. Cette unité centrale est alimentée par un courant électrique.

En plus de l'unité centrale, le juke-box comporte des circuits son pour l'alimentation des haut-parleurs comportant des amplificateurs et tous les éléments nécessaires à fournir une bonne qualité sonore ainsi que des circuits de contrôle et de commande d'un moniteur d'affichage et d'un dispositif d'écran tactile.

Il est connu dans l'art antérieur des problèmes créés dans les unités centrales lorsque l'alimentation électrique est coupée brutalement. En effet, si une coupure ou une chute de tension significative intervient, le système d'alimentation de l'unité centrale n'est plus capable de fournir une tension régulée pour le bon fonctionnement de l'unité centrale. Il s'en suit une chute brutale de la tension dans l'unité centrale. Cette chute brutale de tension peut occasionner des dommages importants dans le système informatique, notamment des pertes de données, voire même des dommages dans les programmes ou les éléments matériels de l'unité centrale. Par exemple, si lors de la chute brutale de tension, le microprocesseur effectuait des opérations d'écriture sur le disque dur, les données qui devaient être écrites sont alors perdues et le disque dur risque d'être endommagé.

Pour remédier à ce problème, il existe dans l'art antérieur des dispositifs d'alimentation électrique qui permettent à une unité centrale d'effectuer toutes les opérations de fermeture et de sauvegarde des fichiers du système informatique en cas de coupure de courant de l'alimentation principale. Ces dispositifs sont basés sur le principe de l'utilisation de batteries qui fournissent le courant nécessaire, pendant une coupure de courant, pour fermer le système informatique. Ces batteries fournissent une tension constante pendant un temps suffisamment long pour permettre plusieurs défaillances de l'alimentation principale sans recharge de la batterie. Elles permettent aussi une sauvegarde complète du système informatique. Toutefois, si les batteries se déchargent par accident, le temps pour arriver à une charge suffisante permettant une sauvegarde sera important. On peut qualifier ce type d'alimentation d'alimentation semi-permanente. Ces batteries présentent l'inconvénient d'avoir un coût très élevé et de nécessiter une maintenance périodique.

La présente invention a donc pour objet de pallier les inconvénients de l'art antérieur en proposant un dispositif de conception simple, ne nécessitant aucune maintenance et délivrant pratiquement instantanément un courant pendant une durée suffisante après une coupure d'alimentation électrique principale, pour que l'unité centrale puisse procéder à la fermeture complète du système informatique.

Ce but est atteint par le fait que le dispositif d'alimentation électrique sécurisée comprend une alimentation principale connectée à une source de courant électrique, délivrant par des connexions électriques au moins une tension déterminée à une unité centrale, cette unité centrale comprenant un programme d'exploitation informatique comprenant un programme de fermeture et de sauvegarde des fichiers du système informatique et un programme de démarrage caractérisé en ce que le dispositif comprend également des moyens de détection d'une chute, en deçà d'un seuil déterminé, d'une tension déterminée délivrée par l'alimentation principale, des moyens d'accumulation quasi instantanée d'énergie électrique connectés d'une part à la source de courant électrique, et d'autre part à une alimentation de secours délivrant à l'unité centrale des tensions suffisantes à son fonctionnement, par un circuit de substitution automatique de l'alimentation de secours à l'alimentation principale et des moyens de déclenchement d'une procédure de sauvegarde après un intervalle de temps déterminé .

Selon une autre particularité, les valeurs de la ou des tensions délivrées par l'alimentation de secours sont inférieures aux valeurs correspondantes de la ou des tensions délivrées par l'alimentation principale et supérieures ou égales aux valeurs nécessaires pour le fonctionnement de l'unité centrale.

Selon une autre particularité, la capacité des moyens d'accumulation d'énergie électrique est déterminée pour que l'alimentation électrique de secours délivre, pendant une durée déterminée, les tensions nécessaires pour la réalisation complète du programme de fermeture et de sauvegarde des fichiers du système informatique.

Selon une autre particularité, les moyens de détection d'une chute de tension sont connectés à un temporisateur situé dans l'unité centrale qui retarde, pendant une durée déterminée, le déclenchement du programme de fermeture et de sauvegarde des fichiers du système informatique.

Selon une autre particularité, les moyens de détection de la chute de tension sont associés à une diode de type Zéner, connectée en parallèle d'une part sur une connexion de sortie de l'alimentation principale et d'autre part à l'unité centrale.

Selon une autre particularité, les moyens d'accumulation d'énergie électrique comprennent un transformateur connecté d'une part à la source de courant électrique et d'autre part à l'alimentation de secours, et un condensateur connecté en parallèle d'une part entre le transformateur et l'alimentation de secours et d'autre part à la masse.

Selon une autre particularité, les moyens d'accumulation d'énergie électrique comprennent une résistance placée entre le transformateur et le condensateur.

Selon une autre particularité, une diode est disposée sur chaque connexion électrique reliant l'alimentation de secours à l'unité centrale, chaque diode ayant pour fonction d'inhiber la délivrance d'un courant électrique par l'alimentation de secours lorsque l'alimentation principale fournit une ou des tensions supérieures à la ou les tensions correspondantes délivrées par l'alimentation de secours.

Selon une autre particularité, le programme du système informatique comprend une procédure de démarrage du système informatique qui est activée, après une temporisation déterminée suffisante, à une charge du condensateur permettant l'exécution du programme de fermeture et de sauvegarde des fichiers du système informatique.

Selon une autre particularité, le programme de démarrage comporte des pas d'attente entre les opérations de début du programme et la première opération d'écriture sur le disque, d'une durée suffisante à la charge complète du condensateur.

Un autre but de l'invention est de proposer un procédé d'alimentation électrique sécurisée pour un système de reproduction audiovisuelle.

Ce but est atteint par le fait que le procédé d'alimentation comprend :
- une étape d'alimentation par une alimentation principale d'un système informatique,
- une étape de surveillance de la tension,
- une étape de substitution d'une alimentation secondaire avec source d'énergie autonome chargeable,
- une étape de détection d'une baisse de tension pendant un temps déterminé
- une étape de lancement d'une procédure de sauvegarde, si après ce temps déterminé, l'alimentation principale n'est pas revenue.

Selon une autre particularité, le procédé d'alimentation comprend :
- une étape de mise en charge automatique de l'alimentation secondaire dès reprise des conditions normales d'alimentation secteur.

Selon une autre particularité, le procédé d'alimentation comprend
- une étape de réinitialisation du système informatique d'après une durée suffisante à la charge complète de la source d'énergie autonome chargeable.

D'autres particularités et avantages de la présente invention apparaîtront plus clairement à la lecture de la description ci-après faite en référence au dessin annexé dans lequel :

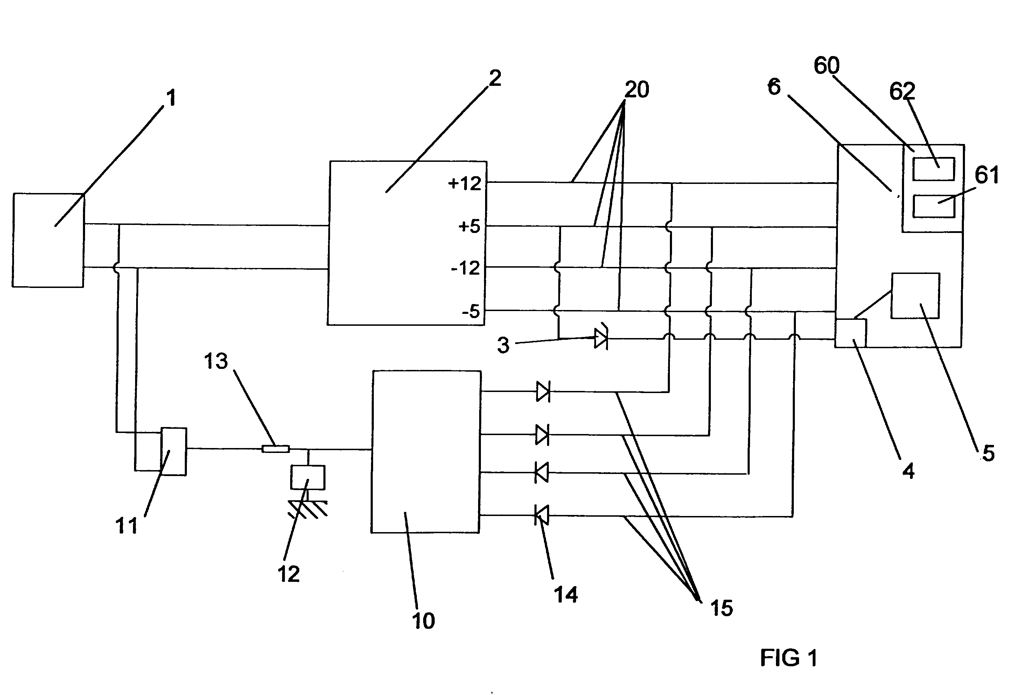

- la figure 1 représente un schéma de principe du dispositif selon l'invention.

A titre d'exemple non limitatif, le schéma de principe de la figure 1 est représenté pour une alimentation principale délivrant 4 tensions à l'unité centrale d'un juke-box. Il est à la portée de l'homme de métier d'adapter le dispositif selon l'invention pour un nombre différent de tensions délivrées par l'alimentation principale en restant dans l'esprit de l'invention.

Le dispositif selon l'invention comprend une alimentation (2) principale connectée à une source de courant électrique (1), correspondant par exemple à une alimentation secteur de courant alternatif. Dans l'exemple représenté, cette alimentation (2) principale est une alimentation à découpage de type connu, délivrant 4 tensions régulées, par exemple +12 V, +5V, -12V et -5V à une unité centrale (6) de type connu. Des moyens de détection (3) sont connectés, d'une part sur une connexion (20) électrique de sortie de l'alimentation (2) principale et d'autre part, à l'unité centrale. Ces moyens de détection fonctionnent de la manière suivante. Lorsque la tension de sortie de l'alimentation (2) principale correspondant à la sortie (20) d'alimentation sur laquelle la diode (3) est connectée est inférieure à une tension seuil déterminée pour les moyens (4) de détection, ces moyens (4) envoient un signal à l'unité centrale (6). Ce signal d'une part déclenche la fin du fonctionnement du circuit son, des circuits de contrôle du moniteur vidéo et d'autre part réduit le fonctionnement du juke-box à son unité centrale et au fonctionnement du disque dur. Ce signal est interprété par l'unité centrale (6) pour déclencher alors un programme (62) de fermeture et de sauvegarde des fichiers du système informatique du juke-box (shutdown). Seuls les fichiers essentiels au bon fonctionnement ultérieur du juke-box sont conservés. Ainsi, les fichiers concernés par la sauvegarde correspondent, notamment aux fichiers de comptabilisation du nombre de fois où chaque sélection musicale du système de reproduction audiovisuelle a été jouée, ces fichiers permettant par la suite le calcul des royalties. La sauvegarde peut concerner aussi bien les fichiers comportant la configuration de système de reproduction audiovisuelle que les fichiers correspondant aux commandes de nouvelles sélections musicales. Avantageusement, afin d'éviter le lancement du programme (62) de fermeture et de sauvegarde des fichiers du système informatique, lorsque la chute de tension détectée par les moyens (4) de détection est fugitive, c'est-à-dire de très courte durée, un temporisateur (5) est disposé entre les moyens (4) de détection et le programme (62) de fermeture et de sauvegarde des fichiers. Ce temporisateur (5) a pour fonction de retarder pendant une durée déterminée le lancement du programme (62) de fermeture et de sauvegarde des fichiers du système informatique. Ce délai est déterminé en fonction de la durée maximale pendant laquelle les moyens (11, 12, 13) d'accumulation quasi instantanée d'énergie électrique (décrits ci-après) peuvent fournir un courant suffisant pour le bon fonctionnement de l'unité centrale (6) et en fonction de la durée du programme (62) de fermeture et de sauvegarde des fichiers du système informatique. Si pendant ce délai de retardement, les moyens (4) de détection ne détectent plus de chute de tension, c'est-à-dire qu'ils ne transmettent plus le signal de chute de tension à l'unité centrale (6), alors le temporisateur (5) inhibe le déclenchement du programme (62) de fermeture et de sauvegarde des fichiers du système informatique. Dans le cas contraire, le programme (62) de fermeture et de sauvegarde des fichiers est activé. Les moyens (4) de détection comprennent une diode (3) de type Zéner. Une diode Zéner se comporte comme un interrupteur. Lorsque la tension qui la traverse est supérieure à un seuil caractéristique de la diode, elle est assimilable à un interrupteur fermé, et lorsque la tension est inférieure à ce seuil, la diode se comporte comme un interrupteur ouvert. Ainsi, lorsque l'alimentation (2) principale est en service, le courant passe au travers de la diode (3) qui fournit donc un signal, supérieur au seuil S, inhibant la sortie du circuit de détection (4). Dès que l'alimentation (2) est défaillante, la tension en sortie de la diode baisse et passe en dessous de la tension seuil S, ce qui active la sortie du circuit (4) après une temporisation pour déclencher le programme (5) de fermeture et de sauvegarde des fichiers du système informatique. Les caractéristiques de la diode (3) sont déterminées pour que sa tension de seuil soit sensiblement égale mais inférieure à la tension de la connexion (20) de l'alimentation (2) principale sur laquelle la diode (3) est connectée. Ainsi, dès que la tension sur cette connexion de sortie va diminuer en dessous de la tension de Zéner, la sortie de la diode représentera une valeur nulle qui permettra alors la détection par le circuit (4).

Afin de permettre le fonctionnement de l'unité centrale pendant l'exécution du programme (62) de fermeture et de sauvegarde des fichiers du système informatique, il est nécessaire de fournir un courant électrique de substitution puisque l'alimentation principale est défaillante. Ce courant est fourni par une alimentation (10) de secours également de type à découpage. Cette alimentation (10) de secours est connectée en sortie en parallèle, par des connexions (15) électriques aux connexions électriques (20) de sortie de l'alimentation (2) principale. L'alimentation (10) de secours fournit le même nombre de tensions régulées à des valeurs inférieures à celles de l'alimentation principale, mais suffisantes pour assurer le fonctionnement de l'unité (6) centrale. Le courant électrique d'entrée de l'alimentation (10) de secours est fourni par des moyens (11, 12, 13) d'accumulation d'énergie électrique. Ces moyens (11, 12, 13) ont pour fonction de fournir de façon quasi instantanée, dès l'alimentation par le secteur, une charge suffisante pour permettre, pendant une durée déterminée, un courant électrique suffisant pour que l'alimentation (10) de secours alimente l'unité centrale (6) avec des tensions régulées suffisantes à assurer le programme minimal (5) de fermeture des fichiers sensibles du système informatique sans que ce programme soit interrompu avant son exécution totale. Les moyens (11, 12, 13) d'accumulation d'énergie électrique comprennent un transformateur (11) et un condensateur (12). Le transformateur (11) est d'une part connecté à la source (1) de courant électrique et d'autre part, à l'alimentation (10) de secours. Le transformateur (11) fournit en sortie un courant continu d'une tension déterminée. Le condensateur (12) est connecté d'une part entre l'alimentation (10) de secours et le transformateur (11) et d'autre part, à la masse. Le transformateur (11) a pour fonction de charger le condensateur (12) dès l'établissement de l'alimentation. La charge se produit de façon quasi instantanée (beaucoup plus rapidement qu'une charge de batterie). La décharge du condensateur (12) a pour fonction de fournir un courant électrique à l'alimentation (10) de secours. Les caractéristiques du condensateur (12) sont déterminées pour qu'il fournisse, lors de sa décharge, un courant électrique et une tension supérieure à un seuil déterminé et pendant une durée déterminée suffisante. Le seuil est déterminé en fonction de la tension nécessaire à l'alimentation (10) de secours pour fournir des tensions de sortie régulées suffisantes pour le fonctionnement de l'unité centrale. La durée est déterminée pour que l'alimentation (10) de secours fournisse des tensions régulées à l'unité centrale (6) correspondant à l'exécution de la totalité du programme (62) de fermeture et de sauvegarde des fichiers. Avantageusement, afin d'éviter une chute de tension brutale lors de la charge du condensateur (12), une résistance (13) est connectée en série entre le transformateur (11) et le condensateur (12). Avantageusement, le temps de la charge complète du condensateur (12) est inférieur à l'intervalle de temps existant entre le début du programme de démarrage (61) de l'unité centrale (6) et la première opération d'écriture sur le disque dur de l'unité centrale (6) déclenchée par ce même programme de démarrage (61). Pour ce faire, on insère, si nécessaire, des pas d'attente dans le programme de démarrage (61) ou on déclenche une temporisation physique qui doit s'écouler avant le lancement de la première écriture sur le disque. Ainsi, même si l'alimentation (2) principale devient défaillante pendant l'exécution du programme de démarrage (61) de l'unité centrale (6), soit les opérations d'écriture n'ont pas été effectuées, car la temporisation n'est pas achevée et la coupure d'alimentation n'a pas de conséquences préjudiciables, soit la première opération d'écriture est en cours d'exécution, le condensateur (12) étant alors complètement chargé, le programme (62) de fermeture et de sauvegarde des fichiers du système informatique pourra être exécuté dans sa totalité, et la première opération d'écriture sera exécutée correctement.

Chaque connexion (15) électrique de sortie de l'alimentation (10) de secours comprend une diode (14). Les tensions fournies par l'alimentation (10) de secours doivent être inférieures aux valeurs des tensions fournies par l'alimentation (2) principale. Ainsi, du fait de la présence des diodes (15), lorsque l'alimentation (2) principale est en service, l'alimentation (10) de secours ne fournit pas de courant. Par contre, dès que l'alimentation (2) principale est défaillante, les tensions fournies par cette alimentation (2) deviennent donc inférieures aux tensions fournies par l'alimentation (10) de secours, et l'alimentation (10) de secours se substitue instantanément à l'alimentation (2) principale constituant ainsi des moyens de substitution automatique de l'alimentation principale.

Le dispositif d'alimentation électrique sécurisée pour système de reproduction audiovisuelle selon l'invention, fonctionne de la façon suivante. En fonctionnement normal, l'alimentation (2) principale fournit des tensions régulées pour le fonctionnement de l'unité centrale (6), et de l'ensemble des autres équipements du juke-box alors l'alimentation (10) de secours ne fournit pas de courant. Lorsque pour une raison quelconque, par exemple, une coupure totale de la source (1) de courant ou une chute de la tension, l'alimentation (2) principale fournit des tensions régulées inférieures aux tensions normales prévues pour le fonctionnement minimal de l'unité centrale, les moyens de détection (4) envoient alors un signal à l'unité centrale, par exemple, un courant nul, qui est interprété par l'unité centrale (6) pour par exemple activer le temporisateur (5) qui retarde l'exécution du programme (62) de fermeture et de sauvegarde des fichiers du système informatique, simultanément l'alimentation (10) de secours se substitue à l'alimentation (2) principale pendant toute la durée de la décharge du condensateur. Si pendant le délai de retardement du temporisateur (5), l'alimentation (2) principale fournit à nouveau des tensions régulées permettant le fonctionnement de l'unité centrale, le temporisateur (5) est inhibé et le programme (62) de fermeture n'est pas lancé, simultanément l'alimentation (10) ne fournit plus de courant et le condensateur se recharge. Si, au contraire, la coupure d'alimentation persiste, le délai de retardement s'écoule, et à la fin de ce délai, le programme (62) de fermeture et de sauvegarde des fichiers du système s'exécute. Tout au long de l'exécution de ce programme (62), les tensions nécessaires au fonctionnement de l'unité centrale (6) sont fournies par l'alimentation (10) de secours alimentée par la décharge du condensateur (12). Si l'alimentation (2) principale revient à nouveau en service pendant l'exécution du programme (62) de fermeture et de sauvegarde des fichiers, une instruction de démarrage du système mémorisée dans un tampon peut être alors exécutée immédiatement après la fin du programme (62) de fermeture et de sauvegarde des fichiers. Dans le cas contraire, le programme (62) de fermeture et de sauvegarde des fichiers s'achève, le courant fourni alors par la décharge du condensateur (12) n'est plus suffisant pour que l'alimentation (10) de secours fournisse des tensions régulées à l'unité centrale (6), ce qui provoque la mise hors tension de celle-ci. Cependant, toutes les données nécessaires au redémarrage correct de l'unité centrale ont pu être sauvegardées grâce à l'exécution complète du programme (62) de fermeture et de sauvegarde des fichiers. Lors de la remise sous tension de l'unité centrale, le condensateur (12) par l'intermédiaire du transformateur (11) va se charger. Simultanément, le programme de démarrage (61) de l'unité centrale (6) va s'exécuter, puisque l'alimentation (2) principale est alors en service. Ce programme de démarrage (61) de type connu, est constitué d'une série d'instructions dont certaines nécessitent une opération d'écriture sur le disque. Comme expliqué plus haut, le temps de charge quasi instantané du condensateur (12) par le transformateur (11) est inférieur à l'intervalle entre le début de l'exécution du programme de démarrage et la première opération d'écriture prévue pour la charge complète du condensateur soit réalisée lors de l'exécution de la première opération d'écriture. La capacité du condensateur est calculée pour fournir à la décharge une énergie suffisante à l'exécution du programme (62) de fermeture et de sauvegarde des fichiers. Ainsi, même si une coupure d'alimentation se produit pendant cette première opération d'écriture, le programme (62) de fermeture pourra être exécuté dans sa totalité, sauvegardant ainsi les données et les composants de l'unité centrale (6).

On conçoit aisément que le dispositif selon l'invention est d'une conception simple, puisqu'il ne fait pas intervenir de batterie. De plus, il est notable que l'alimentation (10) de secours utilisable dans le dispositif est du même type que l'alimentation (2) principale, mais les exigences concernant ses caractéristiques techniques sont moins importantes. En effet, l'alimentation (10) de secours n'est amenée à fonctionner que quelques secondes en continu. De plus, le courant qui l'alimente est faible et est déjà un courant continu.

Il est clair que d'autres modifications à la portée de l'homme du métier entrent dans le cadre de l'invention.

## Revendications

1. Dispositif d'alimentation électrique sécurisée pour système de reproduction audiovisuelle comprenant une alimentation (2) principale connectée à une source (1) de courant électrique, délivrant par des connexions (20) électriques au moins une tension déterminée à une unité centrale (6), cette unité centrale comprenant un programme (60) d'exploitation informatique comprenant un programme (62) de fermeture et de sauvegarde des fichiers du système informatique et un programme (62) de démarrage caractérisé en ce que le dispositif comprend également des moyens (4) de détection d'une chute, en deçà d'un seuil déterminé, d'une tension déterminée délivrée par l'alimentation (2) principale, des moyens (11, 12, 13) d'accumulation quasi instantanée d'énergie électrique connectés d'une part à la source (1) de courant électrique, et d'autre part à une alimentation (10) de secours délivrant à l'unité centrale (6) des tensions suffisantes à son fonctionnement, par un circuit de substitution automatique de l'alimentation de secours (10) à l'alimentation (2) principale et des moyens (5) de déclenchement d'une procédure de sauvegarde après un intervalle de temps déterminé .

2. Dispositif d'alimentation électrique sécurisée selon la revendication 1, caractérisé en ce que les valeurs de la ou des tensions délivrées par l'alimentation (10) de secours sont inférieures aux valeurs correspondantes de la ou des tensions délivrées par l'alimentation (2) principale et supérieures ou égales aux valeurs nécessaires pour le fonctionnement de l'unité centrale (6).

3. Dispositif d'alimentation électrique sécurisée selon la revendication 1 ou 2, caractérisé en ce que la capacité des moyens (11, 12, 13) d'accumulation d'énergie électrique est déterminée pour que l'alimentation (10) de secours délivre, pendant une durée déterminée, les tensions nécessaires pour la réalisation complète du programme (60) de fermeture et de sauvegarde des fichiers du système informatique.

4. Dispositif d'alimentation électrique sécurisée selon l'une des revendications 1 à 3, caractérisé en ce que les moyens (4) de détection d'une chute de tension sont connectés à un temporisateur (5) situé dans l'unité centrale (6) qui retarde, pendant une durée déterminée, le déclenchement du programme (60) de fermeture et de sauvegarde des fichiers du système informatique.

5. Dispositif d'alimentation électrique sécurisée selon l'une des revendications 1 à 4, caractérisé en ce que les moyens (4) de détection de la chute de tension sont associés à une diode de type Zéner, connectée en parallèle d'une part sur une connexion (20) de l'alimentation (2) principale et d'autre part à l'unité centrale (6).

6. Dispositif d'alimentation électrique sécurisée selon l'une des revendications 1 à 5, caractérisé en ce que les moyens (11, 12, 13) d'accumulation d'énergie électrique comprennent un transformateur (11) connecté d'une part à la source (1) de courant électrique et d'autre part à l'alimentation (10) de secours, et un condensateur (12) connecté d'une part entre le transformateur (11) et l'alimentation (2) de secours et d'autre part à la masse.

7. Dispositif d'alimentation électrique sécurisée selon la revendication 6, caractérisé en ce que les moyens d'accumulation (11, 12, 13) d'énergie électrique comprennent une résistance (13) placée entre le transformateur (11) et le condensateur (12).

8. Dispositif d'alimentation électrique sécurisée selon l'une des revendications 1 à 7, caractérisé en ce qu'une diode (14) est disposée sur chaque connexion (15) électrique reliant l'alimentation (10) de secours à l'unité centrale, chaque diode (14) ayant pour fonction d'inhiber la délivrance d'un courant électrique par l'alimentation (10) de secours lorsque l'alimentation (10) principale fournit un courant électrique non nul.

9. Dispositif d'alimentation électrique sécurisée selon l'une des revendications 1 à 8, caractérisé en ce que le programme du système informatique comprend une procédure de démarrage (61) du système informatique qui est activée après une temporisation (5) déterminée suffisante à une charge du condensateur permettant l'exécution du programme (62) de fermeture et de sauvegarde des fichiers du système informatique.

10. Dispositif d'alimentation électrique sécurisée selon l'une des revendications 1 à 8, caractérisé en ce que le programme de démarrage (61) comporte des pas d'attente entre les opérations de début du programme et la première opération d'écriture sur le disque, d'une durée suffisante à la charge complète du condensateur (12).

11. Procédé d'alimentation électrique sécurisé pour système de reproduction audiovisuelle caractérisé en ce qu'il comprend :
- une étape d'alimentation par une alimentation principale d'un système informatique,
- une étape de surveillance de la tension,
- une étape de substitution d'une alimentation secondaire avec source d'énergie autonome chargeable,
- une étape de détection d'une baisse de tension pendant un temps déterminé
- une étape de lancement d'une procédure de sauvegarde, si après ce temps déterminé, l'alimentation principale n'est pas revenue.

12. Procédé d'alimentation selon la revendication 11 caractérisé en ce qu'il comprend :
- une étape de mise en charge automatique de l'alimentation secondaire dès reprise des conditions normales d'alimentation secteur.

13. Procédé d'alimentation selon la revendication 11 ou 12 caractérisé en ce qu'il comprend
- une étape de réinitialisation du système informatique d'après une durée suffisante à la charge complète de la source d'énergie autonome chargeable.
